# EUROPEAN PATENT APPLICATION

(11) **EP 3 001 058 A1**
(43) Date of publication of application: **30.03.2016**
(21) Application number: 14306519.1
(22) Date of filing: 29.09.2014
(51) Int. Cl.: F16C 43/06, F16C 19/06

(54) **Plug assembly, rolling bearing comprising such plug assembly, and machine comprising such rolling bearing**

(71) Applicant: Aktiebolaget SKF, 415 50 Göteborg (SE)
(72) Inventor: Bredoire, Vincent, 89240 Pourrain (FR); Nicolas, Michel, 89200 ANNAY LA COTE (FR)
(74) Representative: Kohl, Thomas

(57) **Abstract**

The invention relates to a plug assembly for use in rolling bearing comprising at least a first ring, at least one second ring, and at least one row of rolling elements arranged between the rings, and a plug, wherein the first ring is provided with an opening (18) for inserting rolling elements (14) into the space between the raceways or for taking rolling elements out of the space between the raceways for assembly. The plug assembly incudes a plug (20) designed to close said opening (18) when the bearing is operating, said plug having an inner end face (20a) facing the rolling elements (14) and an outer end face (20b) opposite to the inner end face (20a).

It is proposed that the plug comprises at least a main body made of plastic material.

## Description

### Field of the Invention

The invention relates to rolling bearings, in particular to slewing bearings for submarine applications.

### Background of the Invention

It is known to provide large-sized roller bearings, in particular angular contact roller bearings formed as slewing bearings with large diameters e.g. for wind turbine applications or applications in construction machinery, with an opening for inserting or removing rolling elements upon assembly or for maintenance works.

An angular contact roller bearing including an opening and a plug for closing the opening is disclosed e.g. in the document WO 2012/126529.

In recent times, there is an increasing request for large-sized roller bearings suitable for submarine applications e.g. tidal power plants, oil trilling applications or offshoring parks. As the inner face of the plugs constitutes a part of the raceway of the roller bearing, the plugs are usually made from bearing steel, which corrodes when exposed to sea water. The corrosion is a problem because it makes the removal of the plug for maintenance purposes difficult and impairs the watertightness of the plug.

Manufacturing the plug from stainless steel causes further problems because the machining of the raceways, which is usually done in a configuration where the plug is fitted into the opening, becomes difficult and it would be impossible to achieve high quality surface properties for the raceways. Further, due to the ductility of metals, a piling up of material on the raceway at the boundary between different metal types risks to take place. Finally, the price of plugs manufactured from stainless steel which are resistant to the sea water is very high.

Attempts to treat the surface of the plug with nickel-based coatings have shown limited success but the coating wears out very rapidly after only a few mounting and dismounting cycles.

### Summary of the Invention

It is therefore the object of the invention to avoid corrosion of a plug in a bearing as described above and, as a consequence, a reduction of the watertightness and the reduction of the lifetime of the roller bearing resulting from sea water leaking in.

The invention starts from a plug assembly for a rolling bearing comprising at least a first ring and at least one second ring. The first ring could be an inner ring and the second ring could be an outer ring or vice versa. Further, the rolling bearing comprises at least one row of rolling elements arranged between the rings. The rolling elements could be balls, tapered rollers or cylindrical rollers as well as toroidal rollers. The bearing could be formed as an angular contact roller bearing or as any another kind of bearing, in particular slewing bearing. The rolling bearing is provided with an opening in one of its rings for inserting rolling elements into the space between the raceways and for taking out the rolling elements out of the space for maintenance or assembly purposes. The opening is closed with a plug of the plug assembly when the bearing is operating, wherein said plug has an inner end face facing the rolling elements and preferably constituting a part of the raceway and an outer end face opposite to the inner end face.

It is proposed that the plug assembly the plug comprises at least a main body made of plastic or synthetic material. Surprisingly, it has turned out that the plastic material can be sufficiently strong to support the loads while being at the same time sufficiently resistant to sea water. The technical prejudice that the raceway should be entirely made of metal could be overcome. It is, however, possible to create embodiments wherein a metallic insert is embedded into the plastics material of the plug so as to form the raceway on the inner end face of the plug.

In a preferred embodiment, the plug is made of polyetheretherketone (PEEK), which is highly resistant to sea water corrosion, cheap and simple in terms of manufacturing.

Further, it is proposed that the plug has an essentially cylindrical outer surface provided with at least one circumferential groove for receiving an O-ring in order to further increase the liquid tightness of the plug.

In particular in an embodiment where the rolling bearing further comprises a locking pin fitted into a transversal bore of the plug, it is preferred that at least one O-ring is arranged between the transversal bore and the outer end face of the plug. As a consequence, sea water leaking in via the lateral bore in the first ring receiving the locking pin is prevented from reaching the raceway. In a most preferred embodiment, O-rings are arranged on both sides of the transversal bore and the plug.

The invention also concerns a machine, such as a generator of a tidal power plant, equipped with at least one rolling bearing according to the invention, the rolling bearing comprising at least one plug assembly according to the invention.

The above embodiments of the invention as well as the appended claims and figures show multiple characterizing features of the invention in specific combinations. The skilled person will easily be able to consider further combinations or subcombinations of these features in order to adapt the invention as defined in the claims to his specific needs.

### Brief Description of the Figures

- Fig. 1: is a partial section of a rolling bearing according to the invention;
- Fig. 2: is a sectional view of the rolling bearing according to the invention; and
- Fig. 3: is a perspective view of the protective cap in its mounted configuration.

### Detailed Description of the Embodiments

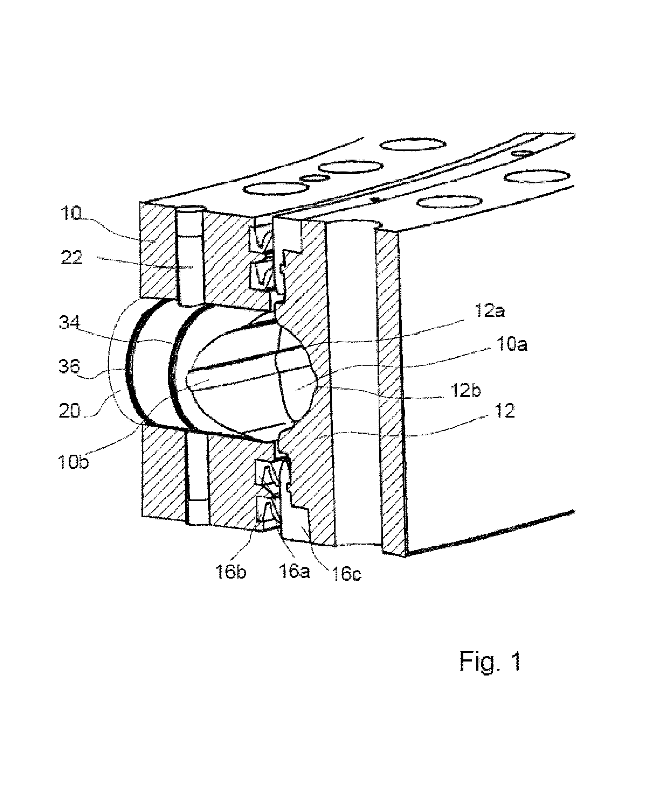

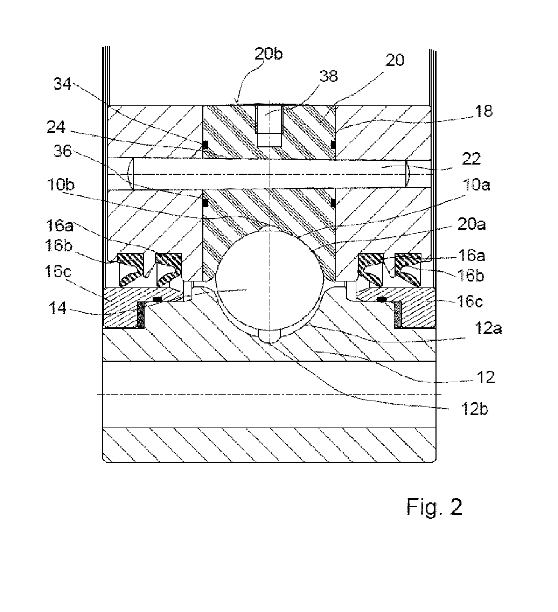

Fig. 1 is a partial section of a rolling bearing according to the invention. The rolling bearing includes a first ring 10 formed as an inner ring and a second ring 12 formed as an outer ring. The rolling bearing is a deep-grooved ball bearing (DGBB) with large diameter and each of the rings 10, 12 is provided with deep grooves forming a raceways 10a, 12a for rolling elements 14 such as balls (Fig. 2). A lubricant groove 10b, 12b is formed in the bottom of the raceways 10a, 12a respectively.

Fig. 2 is a sectional view of the rolling bearing according to the invention.

As illustrated in Fig. 2, the toroidal space between the raceways is sealed in both axial directions by suitable sealing rings 16a, 16b collaborating with a ring-shaped insert 16c forming a gliding surface on which the sealing ring 16a, 16b abut respectively.

The first ring 10 is provided with a bore from the radially inner surface of the first ring 10 to the space between the raceways 10a, 10b. The bore is an opening 18 for inserting rolling elements 14 and suitable spacers (not illustrated) for angularly spacing apart the rolling elements 14 into the space between the raceways 10a, 12a, for taking the rolling elements 14 out of the space and/or for replenishing lubricant for maintenance purposes.

When the bearing is operating, the opening 18 is closed by a plug 20 which comprises at least a main body made of polyetheretherketone (PEEK), which is a highly robust and strong plastics material. The plug 20 is held in place by a slightly conical locking pin 22 fitted through a transversal bore 24 in the plug 20. The bore 24 is aligned with corresponding transversal bores in a first ring 10. The ends of the bores may be sealed with silicone.

The bearing is designed to be used in submarine applications where it is exposed to sea water.

The plug 20 has an inner end face 20a facing the rolling elements 14 formed as balls 14 and being a part of the raceway 10a. The raceway is machined while the plug 20 is mounted such that a smooth raceway 10a without steps at the edges of the plug 20 is achieved. The outer surface of the rings 10, 12 in contact with sea water are coated with an anti-corrosion coating.

Plug 20 has an outer end face 20b which is opposite to the inner end face 20a and which is flush with the radially inner surface of the inner ring 10.

The plug 20 is further provided with a threaded bore 38 for engagement with a tool for mounting and dismounting the plug 20.

Further, the radially outer surfaces of the essentially cylindrical main body of the plug 20 are provided with grooves receiving one O-ring 34, 36 respectively, wherein the first one of the O-rings 34 is arranged between the pin 22 and the outer end face 20b and the other O-ring 36 is arranged between the pin 22 and the space receiving the rolling elements 14.

The assembly procedure for the bearing according to the invention is as follows. The rolling elements 14 are inserted together with the spacers and lubricant such as grease via the opening 18 which is then closed with the plug 20. The plug 20 is fixed by means of the pin 22 and the bores receiving the pins 22 are optionally sealingly closed with silicone.

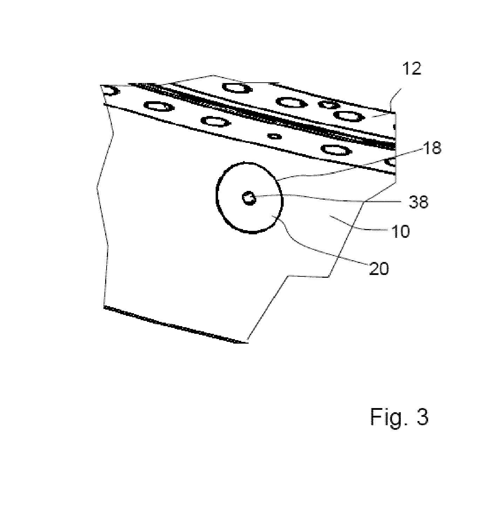

Fig. 3 is a perspective view of a part of the bearing showing the plug 20 fitted into the opening 18. The tolerances of the plug 20 are such that a tight press-fitting connection is achieved. Alternatively or in addition, adhesive is used to hold the plug 20 in position into the opening 18.

## Claims

1. Plug assembly for use in a rolling bearing comprising at least a first ring (10) and at least one second ring (12) and at least one row of rolling elements (14) arranged between the rings (10, 12), wherein the first ring (10) is provided with an opening (18) for inserting the rolling elements (14) into a space between raceways (10a, 12a) of the rings (10, 12) or for taking said rolling elements (14) out of the space between the raceways (10a, 12a), the plug assembly comprising a plug (20), wherein the plug (20) is designed to close said opening (18) when the bearing is operating, said plug (18) having an inner end face (20a) facing the rolling elements and configured to form a part of the raceway (10a) and an outer end face (20b) opposite to the inner end face (20a),
**characterized in that**
the plug (20) comprises at least a main body made of plastic material.

2. Plug assembly according to claim 1,
**characterized in that**
the plug (20) is made of polyetheretherketone (PEEK).

3. Plug assembly according to one of the preceding claims,
**characterized in that**
the plug (20) has an essentially cylindrical outer surface provided with at least one circumferential groove for receiving an O-ring (34, 36).

4. Plug assembly according to one of the preceding claims,
**characterized by**
further comprising a locking pin (22) to be fitted into a transversal bore (24) of the plug (20), wherein at least one O-ring (36) is arranged between the transversal bore (24) and the inner end face (20a) of the plug (20).

5. Plug assembly according to one of the preceding claims,
**characterized by**
further comprising a locking pin (22) to be fitted into a transversal bore (24) of the plug (20), wherein at least one O-ring (36) is arranged between the transversal bore (24) and the outer end face (20b) of the plug (20).

6. Rolling bearing including at least one plug assembly according to one of the preceding claims.

7. Rolling bearing according to claim 6, wherein the rolling bearing is formed as a slewing bearing for submarine applications.

8. Machine including at least one rolling bearing according to claim 6 or 7.
